# EUROPÄISCHE PATENTANMELDUNG

(11) **EP 0 526 727 A1**
(43) Veröffentlichungstag der Anmeldung: **10.02.1993**
(21) Anmeldenummer: 92110717.3
(22) Anmeldetag: 25.06.1992
(51) Int. Cl.: G11B 15/04, G11B 23/36, G11B 27/28, G11B 27/32, G11B 15/02, G11B 27/34, G11B 27/11, G11B 27/028

(54) **Verfahren zur wirtschaftlichen Ausnutzung eines Magnetbandes**

(30) Priorität: 03.08.1991 DE 4125848
(71) Anmelder: GRUNDIG E.M.V. Elektro-Mechanische Versuchsanstalt Max Grundig holländ. Stiftung & Co. KG., D-90762 Fürth (DE)
(72) Erfinder: Ziegler, Cornelius, Dipl.-Ing., Grundig E.M.V., Kurgartenstrasse 37, W-8510 Fürth (DE)
(74) Vertreter: Eichstädt, Alfred

(57) **Zusammenfassung**

Bei bisherigen Magnetbandaufzeichnungsgeräten war eine wirtschaftliche Ausnutzung der verwendeten Magnetbandkassetten insbesondere dann schwierig, wenn Aufzeichnungen nicht mehr benötigt wurden, die von anderen bestehenden Aufzeichnungen umgeben waren, so daß sich für eine erneute Aufzeichnung ein nicht zusammenhängender Magnetbandandabschnitt ergab.

Für spätere Aufzeichnungen war eine Bedienperson nötig, um die Aufzeichnung immer dann zu unterbrechen, wenn eine bereits vorhandene Aufzeichnung, die erhalten bleiben sollte, übersprungen werden mußte.

Bei dem Verfahren nach der vorliegenden Erfindung erfolgt die Aufzeichnung in die nicht zusammenhängenden Magnetbandabschnitte unter selbständigem Überspringen der bereits vorhandenen Aufzeichnungen im schnellen Vorspulbetrieb.

## Beschreibung

Die Erfindung betrifft ein Verfahren zur wirtschaftlichen Ausnutzung eines Magnetbandes.

Um eine Aufzeichnung auf eine Magnetbandkassette vornehmen zu können, ist es entscheidend, daß die Magnetbandkassette über ausreichend Magnetbandmaterial verfügt, um die gewünschte Aufnahme vollständig ausführen zu können. Handelt es sich bei der Magnetbandkassette um eine neue, unbespielte Kassette, so ist dies anhand der Spieldauer der Kassette leicht zu bestimmen. Wird aber eine Kassette verwendet, auf welche bereits Aufnahmen vorgenommen wurden, so ist es für die Bedienperson des Aufzeichnungsgerätes schwierig zu entscheiden, ob das noch unbespielte Magnetbandmaterial für die geplante Aufzeichnung ausreicht.

Aus der EP-PS 0 063 646 der Anmelderin ist ein Verfahren bekannt, mit dessen Hilfe die Länge des unbespielten Magnetbandmaterials, bzw. die verbleibende Restspielzeit einer Magnetbandkassette festgestellt werden kann. Bei der Bestimmung der Restspielzeit wird dabei davon ausgegangen, daß die bereits vorhandene Aufzeichnung (bzw. auch mehrere Aufzeichnungen) am Anfang des Magnetbandmaterials der Magnetbandkassette beginnt. Somit steht das nach dem Ende der vorhandenen Aufzeichnung verbleibende Magnetbandmaterial für die weitere Aufnahme zur Verfügung. Entsprechend dieses verbleibenden Magnetbandmaterials wird die noch zur Verfügung stehende Restspielzeit bestimmt.

Es kommt aber häufig vor, daß aufgezeichnete Beiträge nicht mehr benötigt werden, wodurch die von ihnen belegten Magnetbandabschnitte für neue Aufzeichnungen frei werden.

Die DE-OS 38 33 452 der Anmelderin beschreibt ein Verfahren, durch das die Vermeidung des versehentlichen Überschreibens von auf einem Videomagnetband aufgezeichneten Videosignalabschnitten sichergestellt wird. Dazu werden die Steuerspursignale der überschreibgeschützten Videosignalabschnitte mit einer charakteristischen Codierung versehen, welche das Überschreiben zu schützender Videosignalabschnitte verhindert. Eine andere Realisierung des Überschreibschutzes wird bei diesem Verfahren dadurch erreicht, daß die Aufzeichnungsdaten (Bandzählerstand des jeweiligen Anfangs und Endes der geschützten Videosignalabschnitte) der mit der charakteristischen Codierung versehenen Videosignalabschnitte in einem geräteseitigen Speicher des Aufzeichnungs- und Wiedergabegeräts gespeichert werden. Bei einer erneuten Aufzeichnung überprüft der Videorecorder automatisch, ob die bis zum Bandende zur Verfügung stehende, nicht überschreibgeschützte Bandlänge für die erneute Aufzeichnung ausreicht. Für den Fall, daß einer oder mehrere dieser geschützten Videosignalabschnitte nicht mehr benötigt werden, können die Aufzeichnungsdaten der Videosignalabschnitte aus dem geräteseitigen Speicher und die charakteristische Codierung der Steuerspurimpulse gelöscht werden. Somit stehen die Magnetbandabschnitte, auf welchen die nicht mehr benötigten Videosignale aufgezeichnet sind, für eine erneute Aufzeichnung zur Verfügung.

Sind aufgrund des oben beschriebenen Falls Magnetbandabschnitte für eine erneute Aufzeichnung frei geworden, so stellt sich für die Bedienperson bei der Aufzeichnung die Frage, wieviel Magnetband insgesamt noch für die erneute Aufzeichnung vorhanden ist. Die Zusammenfassung der japanischen Offenlegung JP 2-152085 (A) gibt ein Magnetbandaufzeichnungsgerät an, mit dem eine automatische Bestimmung der Restspielzeit für diesen Fall möglich ist. Dazu werden alle Magnetbandabschnitte festgestellt, die für eine erneute Aufzeichnung frei sind und die ihnen entsprechenden Einzel-Restspielzeiten werden von einem arithmetischen Schaltkreis zur insgesamt zur Verfügung stehenden Gesamt-Restspielzeit zusammengefaßt.

Es tritt allerdings ein Problem auf, falls die ermittelte Gesamt-Restspielzeit einer Magnetbandkassette für die Aufzeichnung eines einzigen Beitrags verwendet werden soll. In diesem Fall muß die Bedienperson die Aufzeichnung am Anfang des ersten freien Magnetbandabschnitts starten, bei Erreichen des ersten überschreibgeschützten Magnetbandabschnitts die Aufzeichnung stoppen, das Magnetband im schnellen Vorspulbetrieb zum Anfang des nächsten freien Magnetbandabschnitts transportieren und die Aufzeichnung dort fortsetzen. Dieser Bedienvorgang wiederholt sich für alle freien Magnetbandabschnitte, die von überschreibgeschützten Magnetbandabschnitten eingegrenzt sind.

Die Aufgabe der Erfindung besteht darin, einen Weg aufzuzeigen, der dem Benutzer eines Magnetbandgerätes die wirtschaftliche Ausnutzung von Magnetbändern gestattet.

Diese Aufgabe wird durch die in den Patentansprüchen beschriebene Erfindung gelöst.

Die Vorteile der Erfindung bestehen insbesondere darin, daß es das beanspruchte Verfahren erlaubt, die gesamte Restspielzeit von Magnetbandkassetten zu bestimmen, auch wenn die bereits vorhandenen Aufzeichnungen keinen am Magnetbandanfang beginnenden Magnetbandabschnitt bilden, der auch nicht zusammenhängend zu sein braucht. Dadurch wird es einer Bedienperson ermöglicht, sich auf einfache Art und Weise einen vollständigen Überblick über die auf vorhandenen Magnetbandkassetten zur Verfügung stehenden Restspielzeiten zu verschaffen. Ein weiterer Vorteil der Erfindung besteht darin, daß eine automatische Aufzeichnung von der zeitlichen Länge der gesamten Restspielzeit einer Magnetbandkassette ermöglicht wird. Dies wird dadurch erreicht, daß Magnetbandabschnitte, auf denen sich bereits eine Aufzeichnung befindet, welche nicht überschrieben werden soll, automatisch im schnellen Vorspulbetrieb überwunden werden, woraufhin die Aufzeichnung fortgesetzt wird. Dadurch wird die Ausnutzung aller freien Bandabschnitte erreicht, ohne daß eine Bedienperson die Aufzeichnung überwachen und steuernd eingreifen muß. Aus der Ausnutzung aller freien Magnetbandabschnitte resultiert letztlich eine wesentlich bessere - und damit wesentlich wirtschaftlichere - Ausnutzung der verwendeten Magnetbandkassetten.

Weitere Vorteile der Erfindung ergeben sich aus der Erläuterung von Ausführungsbeispielen anhand der Figuren.

Nachfolgend wird die Ausführung der Erfindung anhand eines Videomagnetbandgeräts erläutert. Es ist jedoch offensichtlich, daß die Erfindung auch für andere Magnetbandaufzeichnungs- und Wiedergabegeräte verwendet werden kann. In den Figuren sind nur die für das Verständnis der erfindungsgemäßen Vorrichtungen relevanten Bestandteile dargestellt.

Es zeigt:
Figur 1 das abgewickelte Magnetband einer Magnetbandkassette, ohne Darstellung der Magnetbandkassette,
Figur 2 ein erstes Ausführungsbeispiel zur Erläuterung des beanspruchten Verfahrens,
Figur 3 ein zweites Ausführungsbeispiel zur Erläuterung des beanspruchten Verfahrens, und
Figur 4 ein drittes Ausführungsbeispiel zur Erläuterung des beanspruchten Verfahrens.

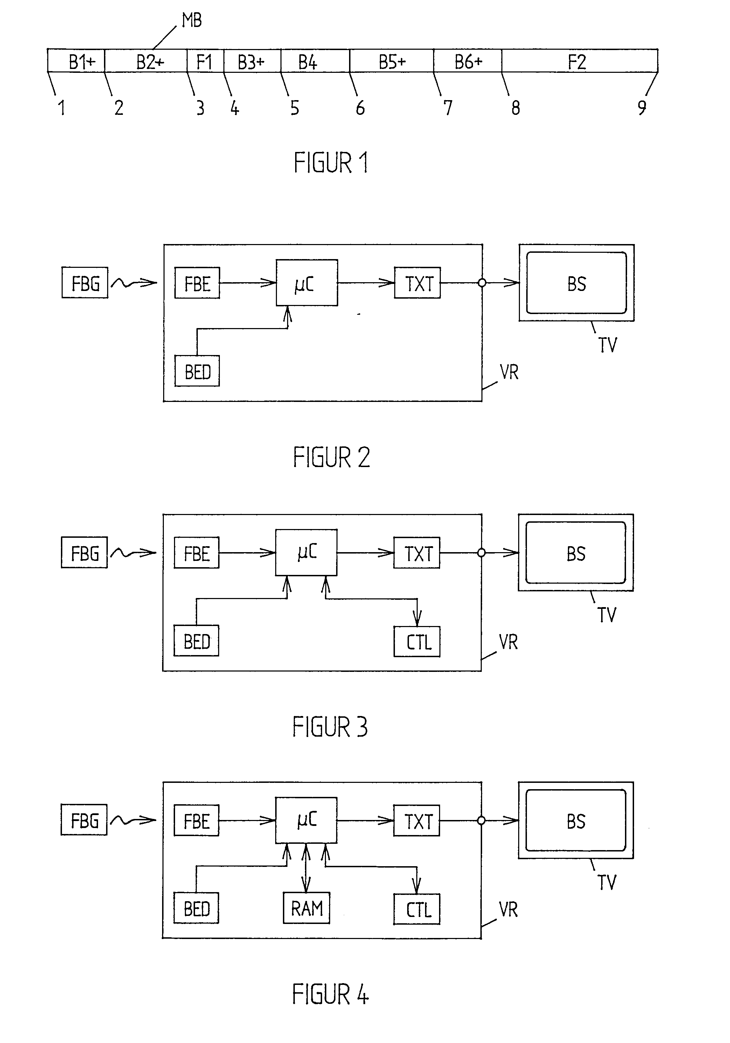

Figur 1 stellt das abgewickelte Magnetband MB einer Magnetbandkassette und die auf dem Magnetband MB bereits vorhandenen Aufzeichnungen dar. Ein erster Beitrag B1 + beginnt am Anfang 1 des Magnetbandes MB und endet an der Bandstelle 2. Der erste Beitrag B1 + soll bei einer erneuten Aufzeichnung nicht überschrieben werden. Dies wird durch das Pluszeichen in der Beitragsnumerierung B1 + ausgedrückt. An der Bandstelle 2 schließt sich der Beitrag B2 + an, der bis zur Bandstelle 3 dauert und ebenfalls überschreibgeschützt ist. Zwischen den Bandstellen 3 und 4 befindet sich ein freier, unbespielter Bandabschnitt F1, wie er beispielsweise entstehen kann, wenn die Bedienperson vor Aufzeichnung des Beitrags B3 + das Magnetband vom Anfang 1 her bis zu einer Bandstelle transportieren wollte, ab der keine überschreibgeschützte Aufnahme mehr vorliegt, das Magnetband aber zu weit bewegt hat. Daran schließt sich der überschreibgeschützte Beitrag B3 + an, der von der Bandstelle 4 bis zur Bandstelle 5 reicht. Der folgende Beitrag B4 zwischen den Bandstellen 5 und 6 wird nicht mehr benötigt und kann deshalb bei einer erneuten Aufnahme überschrieben werden. Es folgen die Beiträge B5 + und B6 +, die zwischen den Bandstellen 6 und 7 bzw. 7 und 8 liegen. Ab der Bandstelle 8 bis zum Bandende 9 befindet sich ein Bandabschnitt F2 ohne Aufzeichnungen.

Soll das auf der Magnetbandkassette MB für eine Aufzeichnung zur Verfügung stehende Magnetbandmaterial bestmöglich ausgenutzt werden, so müssen alle freien Bandabschnitte genutzt werden. Im Beispiel der Figur 1 sind dies die Bandabschnitte F1 und F2, die keine Aufzeichnungen aufweisen, und der Bandabschnitt B4, der eine Aufzeichnung enthält, die nicht mehr benötigt wird.

Mit Hilfe der in Figur 2 dargestellten ersten erfindungsgemäßen Ausführungsform soll eine mögliche Vorgehensweise beschrieben werden, die es bei Kenntnis der für eine erneute Aufzeichnung zur Verfügung stehenden Bandabschnitte erlaubt, das vorhandene freie Magnetbandmaterial auszunutzen.

Die gezeigte Ausführungsform weist einen Fernbedienungsgeber FBG, einen Videorecorder VR und ein daran angeschlossenes Fernsehgerät TV auf. Der Videorecorder umfaßt u.a. einen Mikrocomputer uC zur Funktions- und Bedienungssteuerung, einen Fernbedienungsempfänger FBE, der die Steuersignale des Fernbedienungsgebers FBG empfängt und an den Mikrocomputer uC weiterleitet. Zur Eingabe von Steuersignalen kann außerdem eine Nahbedienungseinheit BED vorgesehen sein. Desweiteren ist ein Textbaustein TXT vorhanden, der zur Aufzeichnungs- und Wiedergabeprogrammierung des Videorecorders VR die nötigen Programmierdialogsignale erzeugt, die auf dem Bildschirm BS des angeschlossenen Fernsehgeräts TV sichtbar gemacht werden. Die Anzeige der für die Programmierung nötigen Informationen kann aber auch mittels einer Anzeige erfolgen, die sich im Videorecorder VR oder im Fernbedienungsgeber FBG befindet.

Wird das in Figur 1 dargestellte Magnetband MB für die erneute Aufzeichnung eines Beitrags verwendet, dessen zeitliche Länge in etwa der Gesamt-Restspielzeit des Magnetbands entspricht, so kann eine Bedienperson vor der Aufnahme über den Fernbedienungsgeber FBG oder den Nahbedienteil BED die Bandstellen eingeben, die die freien Bandabschnitte begrenzen. Entsprechend dem obigen Beispiel sind dies die Bandstellen 3 und 4 für den freien Bandabschnitt F1, die Bandstellen 5 und 6 für die nicht mehr benötigte Aufnahme B4, sowie die Bandstelle 8 für den freien Endbandabschnitt. Die Daten dieser Bandstellen werden im Arbeitsspeicher des Mikrocomputers uC gespeichert.

Derart programmiert beginnt der Videorecorder VR an der Bandstelle 3 mit der Aufnahme. Bei Erreichen der Bandstelle 4 wird die Aufzeichnung, gesteuert durch den Mikrocomputer uC, unterbrochen, das Magnetband MB im schnellen Vorspulbetrieb an die Bandstelle 5 transportiert, wodurch der Beitrag B3 + erhalten bleibt.

Daraufhin wird die Aufnahme fortgesetzt und an der Bandstelle 6 erneut unterbrochen, um die bereits aufgezeichneten Beiträge B5 + und B6 + zu überwinden. Ab der Bandstelle 8 wird die Aufzeichnung schließlich bis zum Aufzeichnungsende fortgesetzt. Da die Gesamt-Restspielzeit in etwa der Zeitdauer der Aufnahme entspricht, liegt das Aufzeichnungsende vor dem Magnetbandende 9.

Zur Wiedergabe eines derart aufgezeichneten Beitrags sind von der Bedienperson erneut die relevanten Bandstellen anzugeben, die auch bei der Aufnahme angegeben wurden.

Die in Figur 3 dargestellte zweite Ausführungsform unterscheidet sich von der ersten Ausführungsform durch eine zusätzlich Einrichtung CTL, die zur Abtastung einer Steuerspur, wie sie bei modernen Videogeräten gebräuchlich ist, verwendet wird. In dieser Steuerspur sind auch Informationen über den Anfang und das Ende von aufgezeichneten Beiträgen enthalten. In diese Steuerspur werden am Anfang und Ende von Beiträgen - bei deren Aufzeichnung - Markierungen eingetragen. Mittels dieser Markierungen lassen sich für eine im Videorecorder VR befindliche Magnetbandkassette alle Bandstellen ermitteln, die Anfang und Ende der vorhandenen Magnetbandabschnitte kennzeichnen. Dies geschieht nach dem Einlegen der Magnetbandkassette im schnellen Umspulbetrieb und ist beispielsweise in der nicht vorveröffentlichten deutschen Patentanmeldung P 40 35 888.7 der Anmelderin beschrieben. Die so ermittelten Bandstellen können über den Textbaustein TXT auf dem Bildschirm BS des an den Videorecorder VR angeschlossenen Fernsehgeräts TV dargestellt werden. Mittels des Fernbedienungsgebers FBG oder der Nahbedienung BED kann die Auswahl der für die erneute Aufnahme relevanten Bandstellen, wie sie beispielsweise bei Figur 1 vorhanden sind, z.B. durch die Benutzung eines Cursors vorgenommen werden. Die nach dieser Auswahl für die erneute Aufnahme zur Verfügung stehende Gesamt-Restspielzeit kann über den Textbaustein TXT dargestellt werden. Außerdem ist es bei der erneuten Aufnahme möglich, die bei der Aufzeichnung entstehenden zusammengehörigen Bandabschnitte durch Anderung der Signale in der Steuerspur zu kennzeichnen.

Bei der Wiedergabe der so entstandenen Aufzeichnung müssen diese Bandstellen wiederum angegeben werden, um die dazwischen liegenden Aufnahmen zu überspringen. Die zusammengehörigen Bandabschnitte sind aber anhand der Auswertung der Signale in der Steuerspur mittels der Einrichtung CTL leicht zu ermitteln, so daß die Eingabe durch eine Bedienperson überflüssig wird.

In Figur 4 ist die dritte Ausführungsform dargestellt, die wie die zweite Ausführungsform aufgebaut ist, aber zusätzlich noch über einen geräteseitigen, nichtflüchtigen Speicher RAM für Schreib-und Leseoperationen enthält. Dieser Speicher RAM übernimmt Archivierungsfunktionen für die mit dem Videorecorder VR aufgezeichneten Magnetbandkassetten. Es werden z.B. die Bandstände für Anfang und Ende aufgezeichneter Beiträge, die Titel der Beiträge, ein möglicherweise vorhandener Überschreibschutz für den jeweiligen Beitrag usw. festgehalten. Der Inhalt des Speichers RAM kann über den Textbaustein TXT auf dem Bildschirm BS dargestellt werden und ist somit der Bedienperson zugänglich. Ein derartiger Speicher RAM wird beispielsweise in der DE-OS 38 33 452 der Anmelderin beschrieben. Im Speicher RAM können sich auch Daten von Magnetbandkassetten befinden, die ursprünglich nicht mit dem beschriebenen Videorecorder VR aufgenommen wurden, deren Aufnahmedaten aber in einem nachträglichen Archivierungslauf (siehe z.B. die nicht vorveröffentlichte deutsche Patentanmeldung P 40 45 888.7) ermittelt wurden.

Ist eine Aufzeichnung von bestimmter zeitlicher Länge geplant, so kann die Bedienperson anhand der im Speicher vorhandenen Informationen feststellen, welche Magnetbandkassette noch über genügend Restspielzeit verfügt. Legt die Bedienperson die so gefundene Magnetbandkassette ein, so wird das Magnetband aufgrund der im Speicher RAM vorhandenen Bandstände durch Steuerung des Mikrocomputers uC an die Bandstelle transportiert, an welcher der erste für die Aufzeichnung zur Verfügung stehende Bandabschnitt beginnt. Sobald die Aufzeichnung beginnt, steuert der Mikrocomputer uC den Bandtransport so, daß Bandabschnitte, die bereits einen Beitrag enthalten und mit einem Überschreibschutz versehen sind, übersprungen werden. Gleichzeitig werden alle bei einer solchen Aufnahme entstandenen zusammengehörigen Teilbandabschnitte gekennzeichnet und die Kennzeichnung wird im Speicher RAM abgelegt. Damit ist auch die Wiedergabe einer solchen Aufnahme nicht mit zusätzlichem Programmieraufwand für die Bedienperson verbunden.

Der bei solchen Aufnahmen zwangsläufig während des Überspringens bereits vorhandener Aufzeichnungen im schnellen Vorspulbetrieb entstehende Informationsverlust ist für viele Fälle unerheblich, wohingegen die durch die Erfindung möglich gewordene bessere und wirtschaftlichere Ausnutzung der Magnetbandkassetten einen großen Vorteil darstellt. Um eine nicht zu häufige Unterbrechung der Aufzeichnung zu erreichen, kann die Aufzeichnung in freien Magnetbandabschnitten sehr geringer Länge automatisch oder manuell unterdrückt werden.

Beim Überspringen der bereits vorhandenen Aufzeichnungen bei Aufnahme oder Wiedergeabe können Bild- und Tonwiedergabe abgeblendet werden, um störendes Rauschen zu vermeiden. Das Einblenden eines Hinweistextes durch den Textbaustein während des Überspringens stellt eine weitere Methode dar, störendes Rauschen zu vermeiden und hat den Vorteil, daß im Falle der Wiedergabe der Betrachter über das ordnungsgemäße Funktionieren der Geräte informiert ist.

Die für die beschriebenen erfindungsgemäßen Vorrichtungen angegebenen Ausführungsformen der Figuren 2 bis 4 können für sich alleine oder in jeder beliebigen Kombination verwendet werden.

## Patentansprüche

1. Verfahren zur wirtschaftlichen Ausnutzung eines Magnetbandes, mit folgenden Verfahrensschritten:
a) Ermittlung aller auf einem Magnetband für eine Aufzeichnung zur Verfügung stehenden Magnetbandabschnitte, bestehend aus aufzeichnungsfreien und/oder nicht überschreibgeschützten Magnetbandabschnitten,
b) Berechnung der den zur Verfügung stehenden Magnetbandabschnitten entsprechenden Gesamt-Restspielzeit des Magnetbandes unter Verwendung eines Mikrocomputers, und
c) Anzeige der berechneten Gesamt-Restspielzeit,
dadurch gekennzeichnet, daß
d) die Aufzeichnung eines Beitrags am Anfang des ersten zur Verfügung stehenden Magnetbandabschnitts beginnt, und jedesmal automatisch unterbrochen wird, sobald überschreibgeschützte Magnetbandabschnitte auftreten, woraufhin das Magnetband im schnellen Vorlauf bis zum Ende des überschreibgeschützten Magnetbandabschnitts transportiert wird, um daran anschließend den Aufzeichnungsbetrieb fortzusetzen.

2. Verfahren zur Wiedergabe von nach Anspruch 1 aufgezeichneten Beiträgen,
dadurch gekennzeichnet,
daß die Wiedergabe automatisch für die Zeit unterbrochen wird, die benötigt wird, die selben Magnetbandabschnitte wie bei der Aufnahme im schnellen Vorlauf zu überspringen.

3. Verfahren nach einem der Ansprüche 1 oder 2, dadurch gekennzeichnet, daß die für die Aufzeichnung zur Verfügung stehende Bandlaufzeit nach Maßgabe einer auf dem Magnetband befindlichen Steuerspur ermittelt wird, auf der die Anfangs- und Endstellen von bereits vorhandenen Aufzeichnungen sowie ein vorhandener Überschreibschutz markiert sind, und daß bei der erneuten Aufnahme
die zusammengehörigen Magnetbandabschnitte in der Steuerspur gekennzeichnet werden, so daß die Wiedergabe dieser die Aufnahme enthaltenden Magnetbandabschnitte möglich ist.

4. Verfahren nach einem der Ansprüche 1 bis 3, dadurch gekennzeichnet,
daß alle Informationen über die bereits aufgezeichneten Magnetbandabschnitte in einem geräteseitigen Speicher gespeichert sind, und daß bei der erneuten Aufzeichnung alle zu dieser Aufzeichnung gehörigen Magnetbandabschnitte im Speicher gekennzeichnet werden.

5. Vorrichtung zur Durchführung des Verfahrens nach den Ansprüchen 1 oder 2,
gekennzeichnet durch
- eine Bedieneinrichtung (FBE,FBG;BED) zur Eingabe der für eine erneute Aufzeichnung zur Verfügung stehenden Magnetbandabschnitte und/oder der zusammengehörigen Magnetbandabschnitte bei der Wiedergabe,
- einem Mikrocomputer (uC) zur Berechnung der Gesamt-Restspielzeit und zur Steuerung von Aufzeichnung und/oder Wiedergabe, der einen Arbeitsspeicher für die von der Bedieneinrichtung (FBE,FBG;BED) stammenden Daten enthält, und
- einen Textbaustein (TXT) zur Darstellung der durch die Bedienungseinrichtung (FBE,FBG;BED) gesteuerten Dateneingabe und der berechneten Gesamt-Restspielzeit auf einer Anzeigeeinheit (BS).

6. Vorrichtung zur Durchführung des Verfahrens nach den Ansprüchen 1 bis 3,
gekennzeichnet durch
- eine Einrichtung (CTL), welche die Markierungen einer Steuerspur des Magnetbandes auswertet, um Anfang und Ende aller Magnetbandabschnitte eines Magnetbandes zu ermitteln und um bei der Aufzeichnung neue Markierungen in die Steuerspur zu schreiben,
- eine Bedieneinrichtung (FBE,FBG;BED) zur Kennzeichnung der für eine erneute Aufzeichnung zur Verfügung stehenden Magnetbandabschnitte,
- einem Mikrocomputer (uC) zur Berechnung der Gesamt-Restspielzeit und zur Steuerung von Aufzeichnung und/oder Wiedergabe, der einen Arbeitsspeicher für die von der Bedieneinrichtung (FBE,FBG;BED) stammenden Daten enthält, und bei der Aufzeichnung mittels der Einrichtung (CTL) zusammengehörige Magnetbandabschnitte für die spätere Wiedergabe kennzeichnet, und
- einen Textbaustein (TXT) zur Darstellung der durch die Einrichtung (CTL) ermittelten Magnetbandabschnitte und der berechneten Gesamt-Restspielzeit auf einer Anzeigeeinheit (BS), aufgrund der mittels Bedieneinrichtung (FBE,FBG;BED) ausgewählten zur Verfügung stehenden Magnetbandabschnitte.

7. Vorrichtung zur Durchführung des Verfahrens nach den Ansprüchen 1 bis 4, gekennzeichnet durch
- einen nichtflüchtigen Speicher (RAM) zur Speicherung der Anfangs- und Endstellen der Magnetbandabschnitte, auf denen bereits Aufzeichnungen enthalten sind, für eine Vielzahl von Magnetbändern, sowie von Informationen über vorhandenen Überschreibschutz und Zusammengehörigkeit der einzelnen Magnetbandabschnitte,
- eine Bedieneinrichtung (FBE,FBG;BED) zur Steuerung der Vorrichtung,
- einen Mikrocomputer (µC) zur Berechnung der Gesamt-Restspielzeit der Magnetbänder mittels der im nichtflüchtigen Speicher (RAM) enthaltenen Daten, zur Steuerung von Aufzeichnung und/oder Wiedergabe und zur Kennzeichnung zusammengehöriger Magnetbandabschnitte bei der Aufzeichnung, und
- einen Textbaustein (TXT) zur Darstellung der ermittelten Gesamt-Restspielzeiten auf einer Anzeigeeinheit (BS).
